# EUROPEAN PATENT APPLICATION

(11) **EP 2 400 764 A2**
(43) Date of publication of application: **28.12.2011**
(21) Application number: 11171022.4
(22) Date of filing: 22.06.2011
(51) Int. Cl.: H04N 9/12

(54) **Display Apparatus and User Interface Providing Method thereof**

(30) Priority: 28.06.2010 KR 20100061074
(71) Applicant: Samsung Electronics Co., Ltd., Yeoungtong-gu Suwon-si, Gyeonggi-do (KR)
(72) Inventor: Choi, Jae-ho, Seoul (KR)
(74) Representative: Bruce, Alexander Richard Henry

(57) **Abstract**

A UI providing method includes inputting a user signal to select one from among a plurality of modes corresponding to an arrangement of a video wall system, inputting screen setup information corresponding to the mode selected according to the user signal, and displaying a video wall setup UI window to configure settings of a video wall system screen according to the inputted screen setup information. Accordingly, it is possible to configure a video wall system easily.

## Description

The present invention relates to a display apparatus and a user interface (UI) providing method thereof, and more particularly, to a display apparatus for providing UI to setup a video wall and a UI providing method thereof.

Display apparatuses generally operate to present images on the screens thereof. A variety of functions are achievable using the display apparatuses, and one of these functions is the provision of a video wall function. The 'video wall' refers to a function of perceiving a plurality of display apparatuses as one single screen, according to which an image input is enlarged to fit the size corresponding to, for example, 1×4, 2×2, 3×3, 4×4 screens or more. The video wall function can be utilized in places such as business meetings, presentations, exhibitions, traffic control or stock trading rooms to provide one large image on the screens of the plurality of display apparatuses, thereby catching the attention of the viewers more effectively.

However, setting up a video wall from the input image requires the operating person to take into account various factors including the number of display apparatuses constituting the video wall, the desirable scenario, the model or the arrangement of the displayed set, which can be very difficult.

Accordingly, a method of providing a UI is necessary, which enables a user to set up a video wall with ease.

Exemplary embodiments overcome the above disadvantages and other disadvantages not described above. Also, the present inventive concept is not required to overcome the disadvantages described above, and an exemplary embodiment may not overcome any of the problems described above.

Exemplary embodiments provide a display apparatus for providing a UI to enable a user to set up a video wall system easily, and a UI providing method thereof are provided.

An aspect of an exemplary embodiment provides a UI providing method of a display apparatus which may include inputting a user signal to select at least one mode from among a plurality of modes corresponding to an arrangement of a video wall system, inputting screen setup information corresponding to the mode selected according to the user signal from among the plurality of modes, and displaying a video wall setup UI window to configure a plurality of settings of the video wall system according to the inputted screen setup information.

The plurality of modes may include a standard mode to configure a standard video wall system, and a non-standard mode to configure a non-standard video wall system.

If the standard mode is selected, the screen setup information may include at least one of: a display apparatus product line used in the video wall system; a horizontal-to-vertical ratio of the video wall system; and whether or not bezel is to be considered to configure the plurality of settings of the video wall system.

If the non-standard mode is selected, the screen setup information may include whether or not bezel is to be considered to configure the plurality of settings of the video wall system.

The UI providing method may include storing information about a plurality of display apparatuses to be used in the video wall system, wherein, if the non-standard mode is selected, the method may additionally include displaying an apparatus select window to select at least one display apparatus from among the plurality of display apparatuses, and if at least one display apparatus is selected, automatically adding the selected display apparatus to the video wall setup UI window of the non-standard mode.

The UI providing method may include displaying a source select window to select at least one data source from which data is supplied to the video wall system, and if at least one data source is selected, automatically adding the selected data source to the video wall setup UI window.

The plurality of the display apparatus and the data source may be represented by a plurality of corresponding icons, and at least one of the plurality of corresponding icons is selectable and movable by dragging and dropping the at least one corresponding icon.

The UI providing method may include inputting a user command to categorize a plurality of display apparatuses to be used in the video wall system in at least one of the standard mode and the non-standard mode into at least one group, and applying a same data source to the plurality of display apparatuses in the at least one group.

The UI providing method may include displaying a page setup window to configure a plurality of video wall pages, and displaying the plurality of video wall pages configured through the page setup window at predetermined time intervals.

The plurality of the display apparatuses are used in the video wall system, and may be configured to form at least one of: a circular shape, a polygonal shape, and a geometrical shape.

An aspect of another exemplary embodiment provides a video wall system setup method, which may include selecting at least one mode from among a plurality of modes corresponding to an arrangement of a video wall system, displaying a video wall setup UI to configure a plurality of settings of the video wall system according to screen setup information corresponding to the selected mode from among the plurality of modes, providing the screen setup information to the video wall system, and displaying, at the plurality of display apparatuses of the video wall system, a plurality of assigned images according to the screen setup information.

An aspect of another exemplary embodiment provides a display apparatus for providing a UI to setup a video wall system, which may include an input unit which receives a user signal to select at least one mode from among a plurality of modes corresponding to an arrangement of the video wall system, and screen setup information corresponding to the at least one mode selected by the user signal from among the plurality of modes, a UI generating unit which generates a video wall setup UI window, a display unit which displays the video wall setup UI window generated at the UI generating unit, and a control unit which causes the video wall setup UI window to be generated, so that a screen configuration of the video wall system is set according to the screen setup information inputted through the input unit.

The plurality of modes may include a standard mode to configure a standard video wall system, and a non-standard mode to configure a non-standard video wall system.

If the standard mode is selected, the screen setup information may include at least one of: a display apparatus product line used in the video wall system; a horizontal-to-vertical ratio of the video wall system; and whether or not bezel is to be considered to configure the plurality of settings of the video wall system.

If the non-standard mode is selected, the screen setup information may include whether or not bezel is to be considered to configure the plurality of settings of the video wall system.

The display apparatus may include a storage unit which stores information about a plurality of display apparatuses to be used in the video wall system, wherein the control unit controls so that an apparatus select window is displayed to select at least one display apparatus from among the plurality of display apparatuses, and if at least one display apparatus is selected, the selected display apparatus is automatically added to a video wall setup UI window of the non-standard mode.

The control unit may control so that a source select window is displayed to select at least one data source from which data is supplied to the video wall system, and if the at least one data source is selected, the selected data source is automatically added to a video wall setup UI window.

The plurality of the display apparatuses and the at least one data source may be represented by a plurality of corresponding icons, and at least one of the plurality of corresponding icons is selectable and movable by dragging and dropping the at least one corresponding icon.

The control unit may control so that a plurality of display apparatuses to be used in the video wall system in at least one of the standard mode and the non-standard mode is categorized into at least one group according to a user command, and a same data source is applied to the plurality of display apparatuses in the at least one group.

The control unit may control so that a page setup window to configure a plurality of video wall pages is displayed, and the plurality of video wall pages configured through the page setup window is displayed at predetermined time intervals.

The plurality of display apparatuses used in the video wall system may be configured to form at least one of: a circular shape, a polygonal shape, and a geometrical shape.

An aspect of another exemplary embodiment provides a computer-readable recording medium recording therein codes about a UI providing method of a display apparatus, wherein the UI providing method may include inputting a user signal to select at least one mode from among a plurality of modes corresponding to an arrangement of a video wall system, inputting screen setup information corresponding to the at least one mode selected according to the use signal from among the plurality of modes, and displaying a video wall setup UI window to configure a plurality of settings of the video wall system according to the inputted screen setup information.

As a result, a video wall system is configured easily.

The above and/or other aspects of the exemplary embodiments will be more apparent by describing certain exemplary embodiments with reference to the accompanying drawings, in which:
FIG. 1 is a view which illustrates a video wall system according to an exemplary embodiment;
FIG. 2 is a block diagram of a display apparatus according to an exemplary embodiment;
FIGS. 3A and 3B illustrate the constitution of a UI in a standard mode according to an exemplary embodiment;
FIGS. 4A to 4C illustrate a UI in a non-standard mode according to an exemplary embodiment;
FIGS. 5A to 5C and FIGS. 6A to 6C illustrate a UI according to various other exemplary embodiments;
FIGS. 7A to 7C are views which illustrate the grouping of a display apparatus according to an exemplary embodiment;
FIG. 8 is a view provided which illustrate setting a page according to an exemplary embodiment;
FIG. 9 is a flowchart of a UI providing method according to an exemplary embodiment; and
FIG. 10 is a flowchart of a method of setting up a video wall system according to an exemplary embodiment.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments can be carried out without those specifically defined matters. Also, well-known functions or constructions are not described in detail since they would obscure the inventive concept with unnecessary detail.

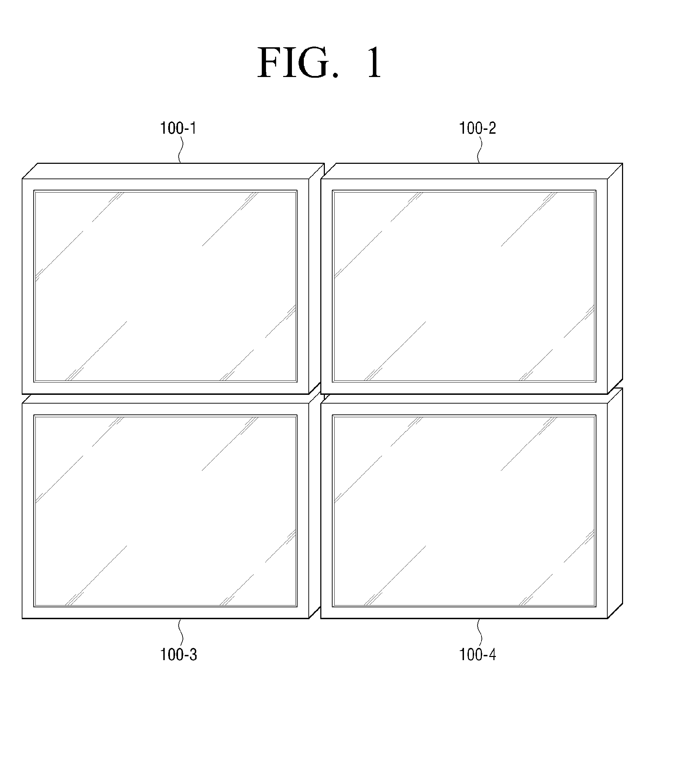

FIG. 1 is a view provided to explain an operation of a video wall system.

Referring to FIG. 1, the video wall system according to one exemplary embodiment may include a plurality of display apparatuses 100-1∼100-4. By way of example, 2x2 display apparatuses (in two lines and two rows) may be provided. However, the above example is only provided for illustrative purpose, and accordingly, the number or arrangement of the display apparatuses of a video wall system may vary.

Meanwhile, one of the display apparatuses 100-1∼100-4 may operate as a main display apparatus to control the operations of the other sub display apparatuses. Alternatively, a separate control apparatus may be provided to control the operations of the respective display apparatuses 100-1∼100-4.

Hereinafter, for convenience of explanation, one of the display apparatuses 100-1∼100-4 operates as a main display apparatus by way of example.

Assuming that the display apparatus 100-1 on the upper-left side operates as the main display apparatus, the other apparatuses, i.e., apparatuses 100-2, 100-3, 100-4 at upper-right, lower-left and lower-right sides, respectively, are sub display apparatuses. The main display apparatus 100-1 is able to control the operation of the respective sub display apparatuses. Accordingly, if the main display apparatus 100-1 is turned on, a video wall setup UI is displayed on the screen of the main display apparatus 100-1 in an on-screen display (OSD) manner. The 'video wall' function herein refers to the function of perceiving a plurality of display apparatuses as one single screen, according to which an input image is split and enlarged to be presented on the plurality of display apparatuses, respectively.

The 'video wall setup UI' refers to a menu window provided to setup the video wall system. The main display apparatus 100-1 generates a plurality of split images by dividing an input image signal according to a predetermined manner of setting up a screen which is input through the video wall setup UI. After that, the main display apparatus 100-1 transmits the split images to the sub display apparatuses 100-2, 100-3, 100-4 so that the images are output through the screens thereof respectively. The main display apparatus 100-1 may also output the split image assigned thereto through the screen thereof. Accordingly, the entire image is output through the display system. Meanwhile, the video wall setup UI will be explained in greater detail below.

The main display apparatus 100-1 may automatically assign the split images to the sub display apparatuses 100-2, 100-3, 100-4. For example, if the entire display apparatuses 100-1∼100-4 are ID-1, ID-2, ID-3 and ID-4, ID-1 may be assigned to the split image corresponding to the main display apparatus 100-1, and the rest of the IDs may be assigned to the rest of the split images based on the main display apparatus 100-1. Accordingly, ID-2 is assigned to the upper-right split image, ID-3 is assigned to the lower-left split image, and ID-4 is assigned to the lower-right split image. As a result, the split images are output through the corresponding display apparatus, respectively.

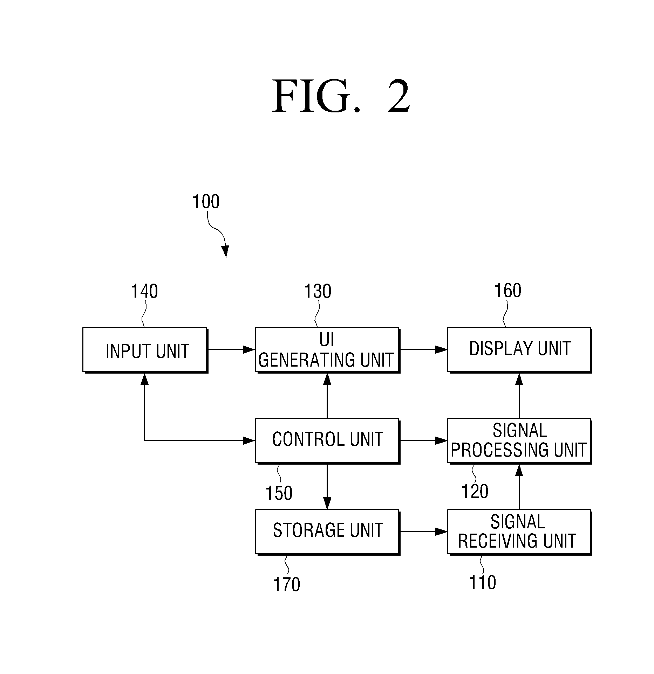

FIG. 2 is a block diagram of a display apparatus according to an exemplary embodiment.

Referring to FIG. 2, the display apparatus 100 may include a signal receiving unit 110, a signal processing unit 120, a UI generating unit 130, an input unit 140, a control unit 150, a display unit 160, and a storage unit 170.

As explained above, one of a plurality of display apparatuses 100-1∼100-4 of a video wall system, or a control apparatus separately provided from a plurality of display apparatuses of a video wall system, may operate to control the video wall function. For convenience of explanation, it is assumed hereinbelow that the display apparatus 100, which is provided separately from the plurality of display apparatuses of the video wall system, controls the display apparatuses 100-1∼100-4 of the video wall system.

The display apparatus 100 is connected to the plurality of external display apparatuses to control the external display apparatuses 100-1∼100-4, and particularly to control the plurality of external display apparatuses to setup a video wall system.

The signal receiving unit 110 tunes to a channel to receive an image signal. Additionally, the signal receiving unit 110 may be connected to an external device to receive various image signals therefrom.

The signal processing unit 120 processes the image signal received at the signal receiving unit 110. Specifically, the signal processing unit 120 splits the input image signal to thereby generate a plurality of split images according to the control of the control unit 150.

The UI generating unit 130 provides a UI to set up a video wall constitution, and generates a video wall setup UI window (or, video wall setup window).

Specifically, the video wall setup UI includes an area to input information about the screen arrangement to setup a video wall, and a video wall setup UI window which will be explained in detail below.

The video wall setup UI window may be the type of UI window that provides a preview of a video wall system arrangement, to take into account information such as the product line of the display apparatuses employed for the video wall system, the rectangular arrangement format of a video wall system, whether or not bezel is taken into consideration to configure the plurality of settings of the video wall system, or the like.

Meanwhile, the UI generating unit 130 may generate a video wall UI in an OSD manner.

The input unit 140 receives a user signal to select one from among a plurality of modes corresponding to the arrangement of the plurality of display apparatuses of the video wall system, together with screen setup information corresponding to the selected mode. The plurality of modes herein may include a standard mode to configure a screen of a standard video wall system and a non-standard mode to configure a screen of a non-standard video wall system. The 'standard video wall system' herein refers to an arrangement of screens conforming to a predetermined horizontal-to-vertical ratio, and the 'non-standard video wall system' refers to a screen arrangement setup by a user as he wishes, i.e., having a horizontal-to-vertical ratio that is not one of numerous predetermined ratios, such as the arrangement in star-formation, heart-formation, or other geometrical patterns.

The screen setup information corresponding to the standard mode may include at least one of: the display apparatus product line employed for the video wall system; the rectangular arrangement of the video wall system; and whether or not bezel is taken into consideration to configure the plurality of settings of the video wall system.

Additionally, the screen setup information corresponding to the non-standard mode may be information about whether or not bezel is taken into consideration to configure the plurality of settings of the video wall system.

The control unit 150 controls the UI generating unit 130 to generate a UI window (hereinbelow, 'video wall setup UI window') 200 to set up a screen configuration of a video wall system according to the screen setup information according to the respective modes input through the input unit 140.

The display unit 160 displays the video wall setup UI and the video wall setup UI window 200 generated by the UI generating unit 130 according to the control of the control unit 150. The display unit 160 may be implemented as a cathode ray tube (CRT), a liquid crystal display (LCD), a plasma display panel (PDP), or any other display medium which is capable of displaying an image.

The storage unit 170 is a storage medium recording therein various data and programs necessary for driving a plurality of display apparatuses of the video wall. Additionally, the storage unit 170 is used to store the data received from or transmitted to outside. For example, the storage unit 170 may store: the ID data to identify the respective display apparatuses of the video wall system; data regarding a path through which the ID data is transmitted; data regarding the structure of the video wall system; or various image sources applicable to the video wall system.

Additionally, the storage unit 170 stores therein information about a plurality of display apparatuses to be applied in the video wall system.

Meanwhile, if a non-standard mode is selected through the input unit 140, the control unit 150 may cause an apparatus select window to appear so that at least one of the plurality of display apparatuses is selected.

Furthermore, if at least one from among the plurality of display apparatuses is selected through the apparatus select window, the control unit 150 may cause the selected display apparatus to be automatically added to the video wall setup UI window and displayed accordingly.

The control unit 150 may also display a source select window to select a data source to configure a video wall system. In this case, if at least one data source is selected from the source select window, the control unit 150 may cause the selected data source to be added automatically to the video wall setup UI window and displayed accordingly.

Accordingly, in the standard mode, the control unit 150 may control in a manner in which the necessary screen setup information is inputted, a video wall setup UI window implementing the inputted screen setup information is displayed, and a source select window to select the data source to setup a video wall system, is then displayed.

Furthermore, in the non-standard mode, the control unit 150 may control in a manner of inputting necessary screen setup information, displaying a video wall setup UI window implementing the inputted screen setup information, displaying an apparatus select window to enable a user to select at least one display apparatus from among the plurality of display apparatuses and arrange the plurality of display apparatuses, selected through the apparatus select window, at desired positions, and then displaying a source select window to enable the user to select the data source to configure a video wall system.

The display apparatus and data source may be represented as corresponding icons, and at least one icon is selectable and movable by, for example, a drag-and-drop manner.

Furthermore, the control unit 150 may control so that the plurality of display apparatuses of a video wall system according to at least one of the standard mode and the non-standard mode, are grouped into at least one group according to the user command.

Furthermore, the control unit 150 may control so that an image from the one same data source is divided to fit the plurality of display apparatuses of the same group.

Furthermore, the control unit 150 may control so that all the groups applied to the screen setup of one video wall system, display the image from the one same data source. Alternatively, the control unit 150 may control so that the respective groups display different data source images.

Furthermore, the control unit 150 may cause a page setup window to configure a plurality of different video wall pages to be applied to the video wall system.

Furthermore, the control unit 150 may control so that all or part of the plurality of pages set through the page setup window are displayed at predetermined time intervals.

Meanwhile, the constitution of the display apparatus according to an exemplary embodiment is not strictly limited to that illustrated in FIG. 2. Accordingly, certain components may be deleted or added as necessary. Furthermore, the function of each component may vary depending on the manner in which the product is embodied.

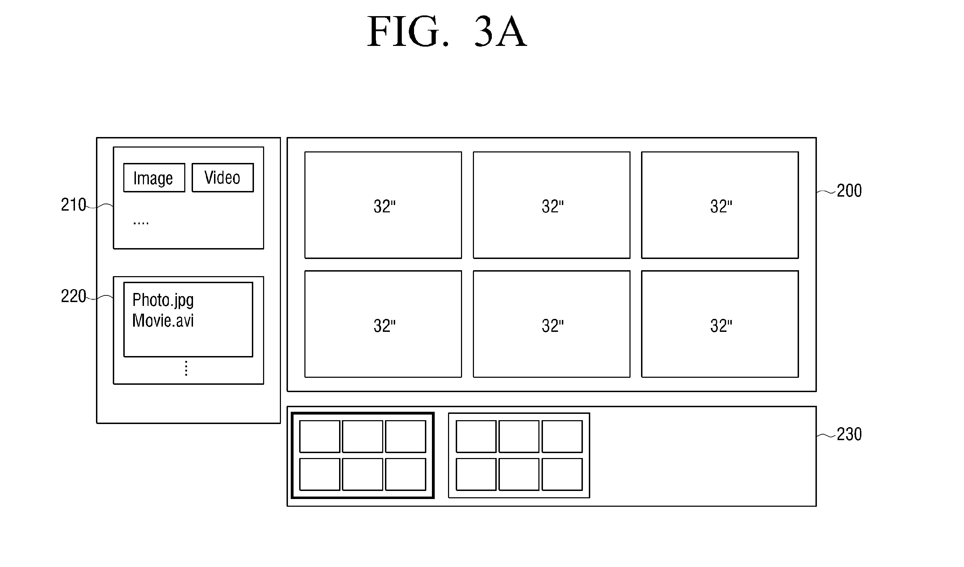

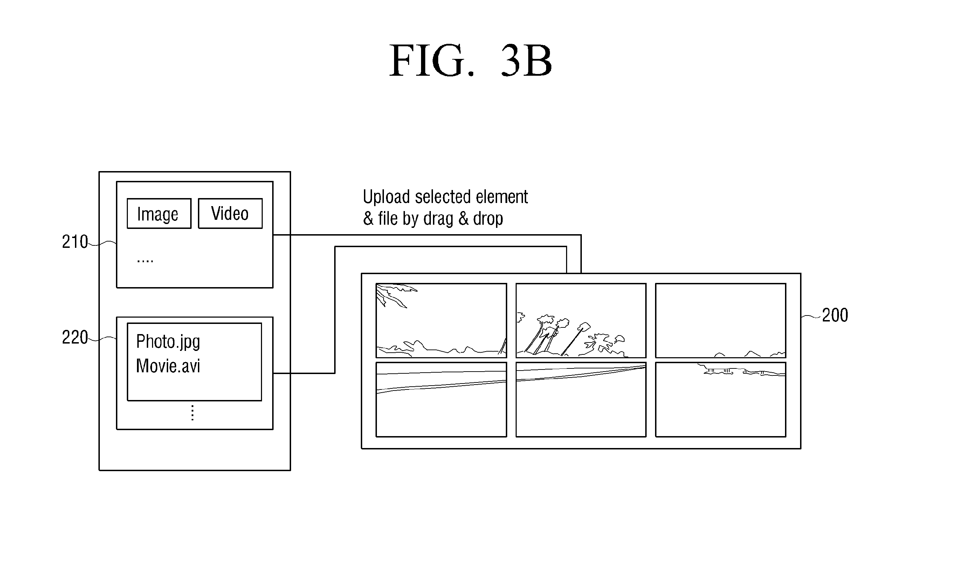

FIGS. 3A and 3B are views illustrating a UI arrangement in the standard mode according to an exemplary embodiment.

As the standard mode begins, the user is able to input information through a menu provided, including at least one of: the display apparatus product line; the horizontal-to-vertical ratio of the video wall system; and whether or not bezel is considered when configuring the plurality of settings of the video wall system. The user is also able to configure a video wall setup UI window 200 according to the input information. In other words, upon inputting of the information such as the display apparatus product line, the horizontal-to-vertical ratio of the video wall system, or whether or not the bezel is considered to configure the plurality of settings of the video wall system, a video wall setup UI window 200, reflecting the inputted information, may be generated and displayed.

FIG. 3A illustrates a video wall setup UI reflecting thereon the information of: the display apparatus product line; the horizontal-to-vertical ratio of the video wall system; and whether or not bezel is considered when configuring the plurality of settings of the video wall system.

Referring to FIG. 3A, display apparatuses 32", selected in a selected video wall system of a 3:2 horizontal-to-vertical ratio, and in consideration of the bezel, are displayed. As for the bezel, a preset value or a user-input value may be applied.

Furthermore, according to FIG. 3A, the video wall setup UI may include a video wall setup window 200, a source select window 210 through which a data source to be applied to the video wall system is selected, and a file searcher 220 to search for a corresponding file. Accordingly, the user is enabled to select a desired data source and reflect his selection on the video wall system.

As illustrated in FIG. 3A, the page setting window 230 may be displayed to enable the user to set a video wall page to be applied to the video wall system, and this will be explained in greater detail below.

FIG. 3B illustrates a method of applying a data source or file selected by the user to the 3x2 video wall setup window 200. The user may use a drag & drop method to apply a desired source or file to the video wall setup window, i.e., the user may select a desired source or file, drag the file to the video wall setup UI window 200 while continuing to select the file, and release the file. Accordingly, the video wall setup UI window 200 reflects the source or file selected by the user, thereby enabling the user to preview a scenario for the possible results of applying the selected source or file to the video wall system.

Meanwhile, as need arises, the user may possibly adjust the bezel through the video wall setup window. For example, the user may adjust the bezel by adjusting the size of an area on the video wall setup window which corresponds to the display apparatus.

Furthermore, it should be understood that the user may modify the information including the display apparatus product line, horizontal-to-vertical ratio of the video wall system, or whether or not bezel is considered, even after the video wall setup window is displayed.

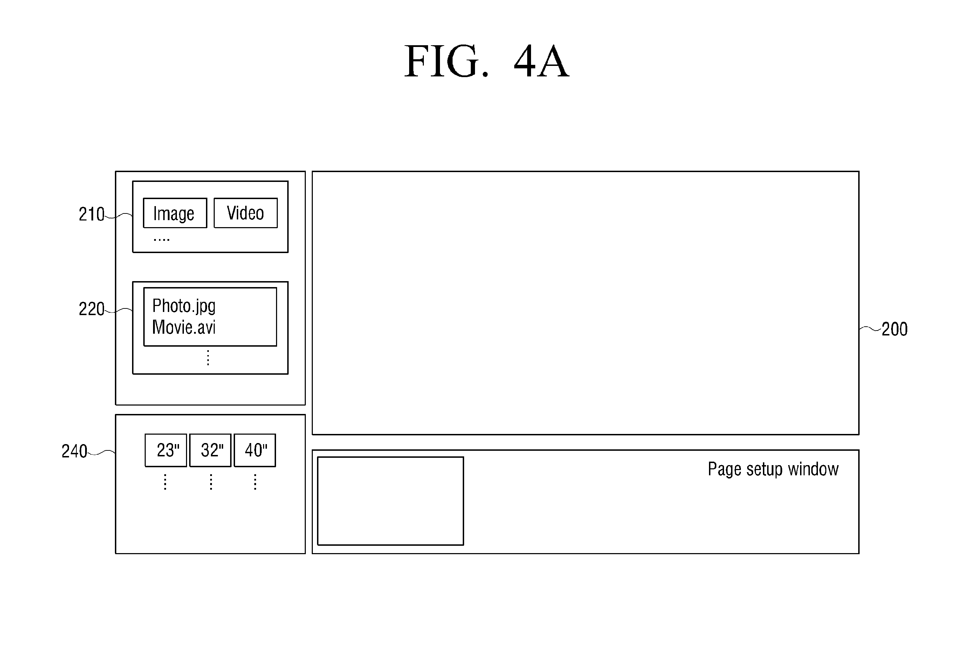

FIGS. 4A to 4C are views illustrating the arrangement of a non-standard mode UI according to an exemplary embodiment.

If the non-standard mode is selected, the user may configure a video wall setup UI window by inputting whether or not to consider the bezel when configuring the video wall system. Accordingly, if the user inputs the information indicating that the bezel is to be considered, the video wall setup UI window is generated by reflecting the inputted information, and displayed.

FIG. 4A illustrates a video wall setup UI generated by reflecting the information that the bezel is to be considered.

Referring to FIG. 4A, in addition to the video wall setup window 200, source select window 210, and file searcher 220, a display select window, or monitor select window, 240 may also be displayed on the video wall setup UI.

Accordingly, the user is able to select a desired display apparatus and place the selected display apparatus on the video wall setup window.

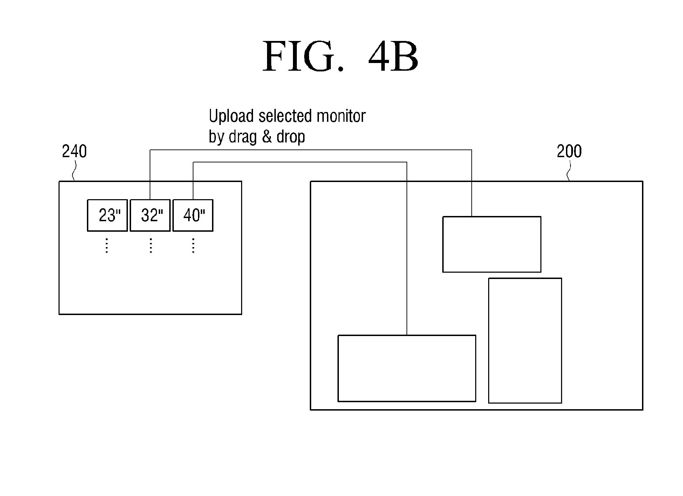

FIG. 4B illustrates a method of selecting a display apparatus desired by a user and placing the selected display apparatus on the video wall setup window 200.

Referring to FIG. 4B, the user may place the selected display apparatus at an area on the video wall setup window 200 using a drag and drop method. However, the 'drag and drop' method is exemplified for illustrative purposes, and other proper methods are also applicable. For example, the user may be enabled to select a desired display apparatus and move the selected display apparatus step by step, i.e., at preset intervals.

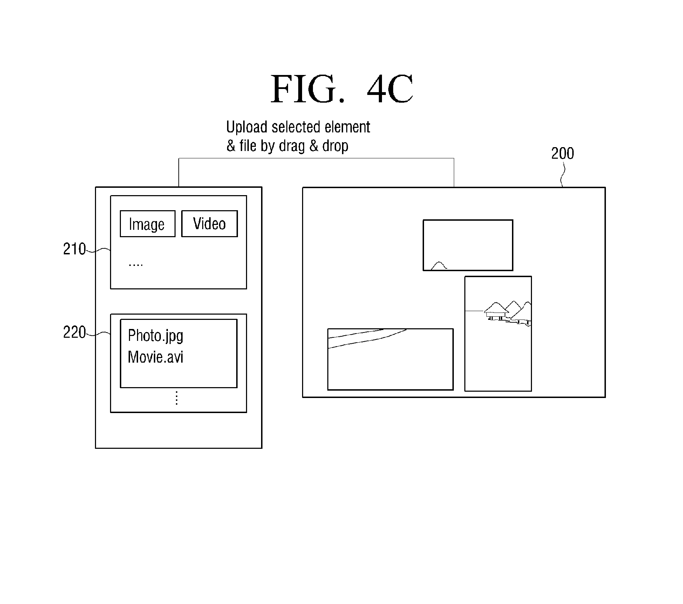

FIG. 4C illustrates an arrangement to apply a data source to be reflected on the video wall system by the user.

Referring to FIG. 4C, the user may select a desired data source and reflect the selected data source on the video wall system by a drag and drop method.

As illustrated in FIGS. 4A to 4C, the display apparatuses and the data source may be represented by corresponding icons.

Meanwhile, although the display apparatus is selected after the video wall setup window 200 is displayed in the exemplary embodiment explained above, other examples are also possible. For example, it is possible that the display apparatus product line be selected additionally. That is, the display apparatus product line may be selected in advance in the non-standard mode, so that only the location is adjusted on the video wall setup window 200.

Furthermore, although the information as to whether or not bezel is to be considered is selected in advance in the exemplary embodiment explained above, this is written only for illustrate purpose. Therefore, the bezel may be determined automatically according to the location of the display apparatus, which is generally the case in the standard mode, or determined after the video wall configuration area is displayed.

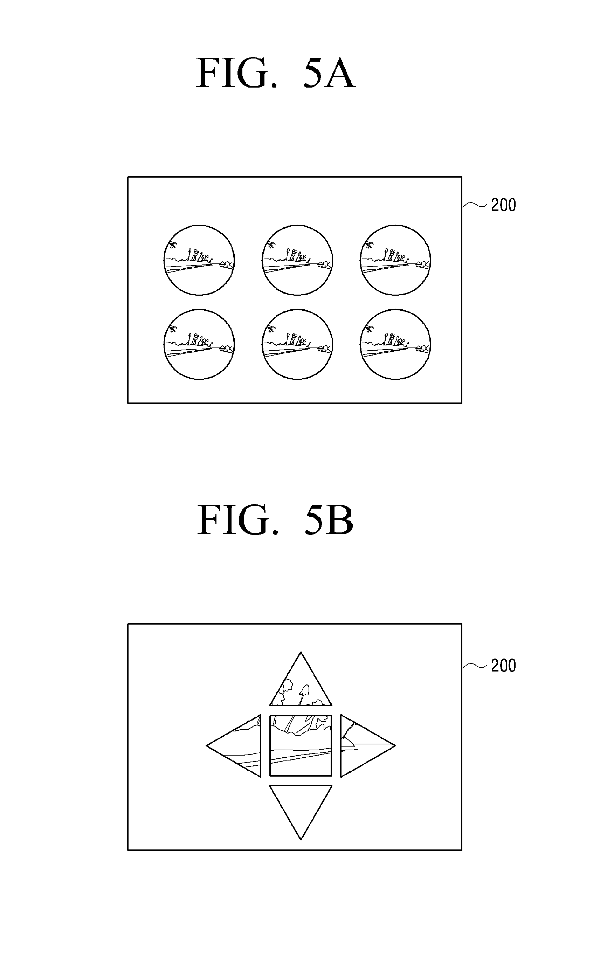

FIGS. 5A to 5C illustrate the constitution of the UI according to various exemplary embodiments.

Referring to FIGS. 5A to 5C, the display apparatuses in the standard or non-standard mode may have a circular, oval or polygonal shape such as triangular or hexagonal shape, or other geometrical shape. Additionally, any shape other than those illustrated in FIGS. 5A to 5C, which can be implemented in the display apparatuses, may be applied.

Referring to FIG. 5A, a video wall system may be configured using circular-shape display apparatuses in the standard mode. That is, various shapes of display apparatuses are applicable even in the standard mode. Additionally, by way of example, a video wall system may be configured in a manner in which each of the display apparatuses displays one complete image thereon as shown in FIG. 5A.

Referring to FIG. 5B, a square-shape display apparatus is applied together with triangular-shape display apparatuses. That is, since it is possible to select a desired display apparatus in the non-standard mode, the user is able to setup a video wall system by combining the display apparatuses of different shapes.

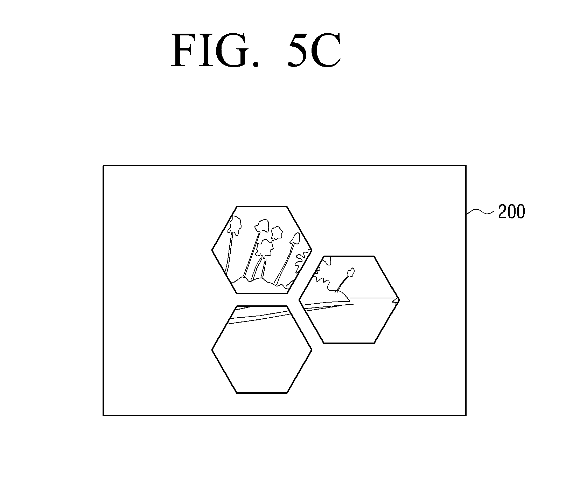

Referring to FIG. 5C, a video wall system may be configured using hexagon-shape display apparatuses in the non-standard mode. Additionally, by way of example, each display apparatus may display a corresponding split image thereon.

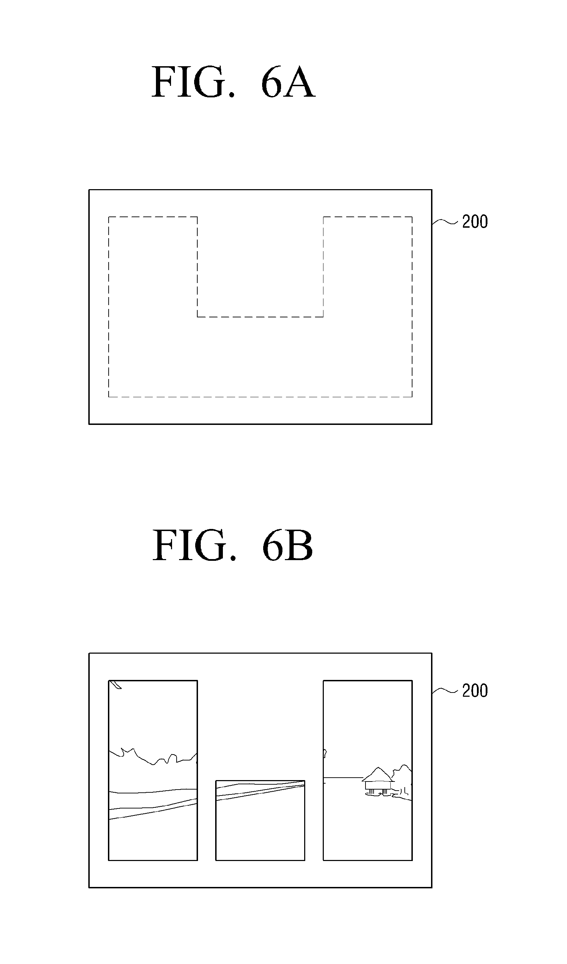

FIGS. 6A to 6C are views provided to explain the constitution of the UI in the non-standard mode according to various exemplary embodiments.

Referring to FIG. 6A, in the non-standard mode, the user may first select the outline of the video wall system the user intends to configure, instead of selecting the display apparatus directly. In this situation, the user may select the outline of the video wall system directly using a touch screen or mouse, or select the outline from among previously-stored choices of the video wall system outlines.

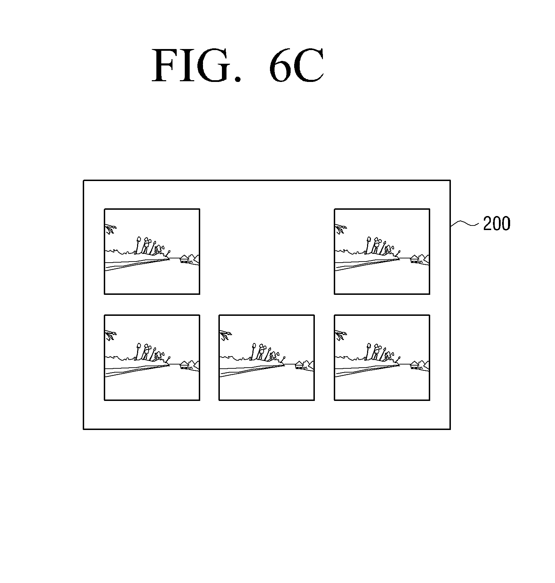

If the user selects the desired outline of the video wall system, appropriate video display apparatuses may be automatically set as illustrated in FIG. 6B or FIG. 6C.

Additionally, it is possible to provide a plurality of display modes applicable to the corresponding outline, for the selection of the user.

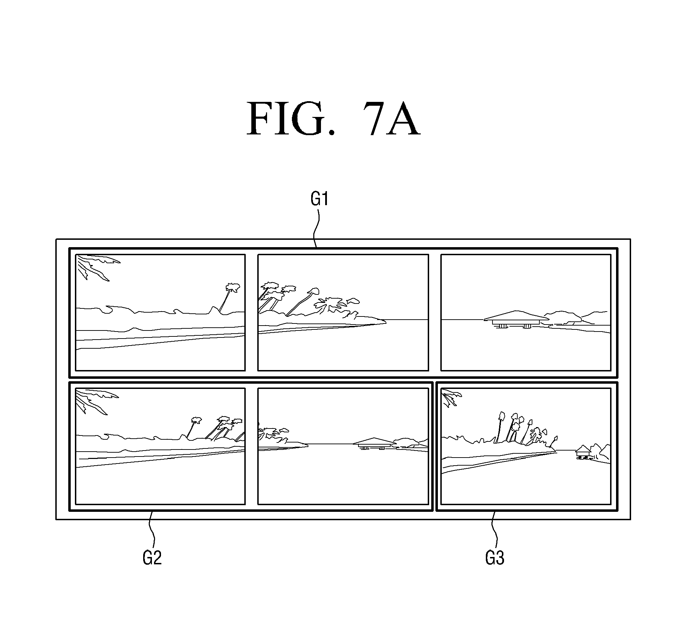

FIGS. 7A to 7C are views provided to explain the arrangement of the display apparatus group according to an exemplary embodiment.

Referring to FIGS. 7A to 7C, the user is able to categorize a plurality of display apparatuses into at least one group through the video wall setup UI window 200.

In one example, in a 3:2 video wall system in the standard mode as the one illustrated in FIG. 7A, the three display apparatuses on the top may be selected and categorized into one group (G1) to display split images of one data source thereon.

Furthermore, two out of three display apparatuses at the bottom may be selected and categorized into another group (G2), and the rest one display apparatus may be selected and categorized into yet another group (G3), so that the display apparatuses of group (G2) display split images of one data source thereon and the display apparatus of group (G3) displays one data source thereon.

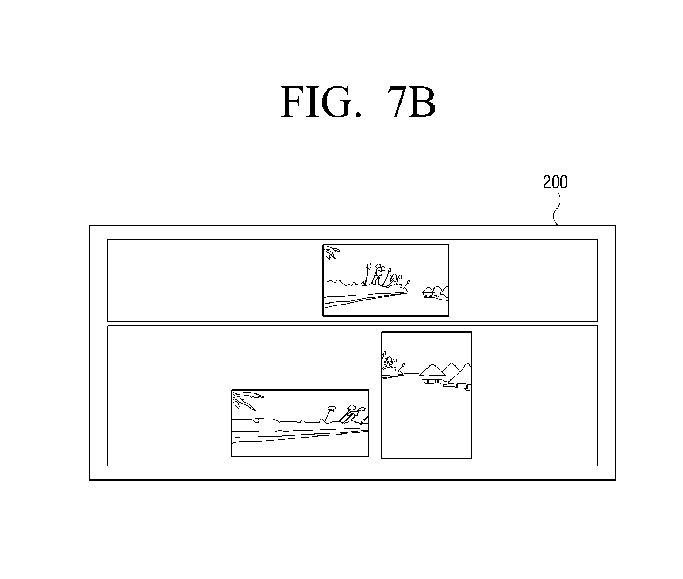

In another example, referring to FIG. 7B, the grouping of the display apparatuses is also possible even when the video wall system is configured in the non-standard mode. That is, one display apparatus on the top may be categorized into one group to display one data source thereon.

Additionally, the two display apparatuses at the bottom may be categorized into another group to display split images of one data source thereon.

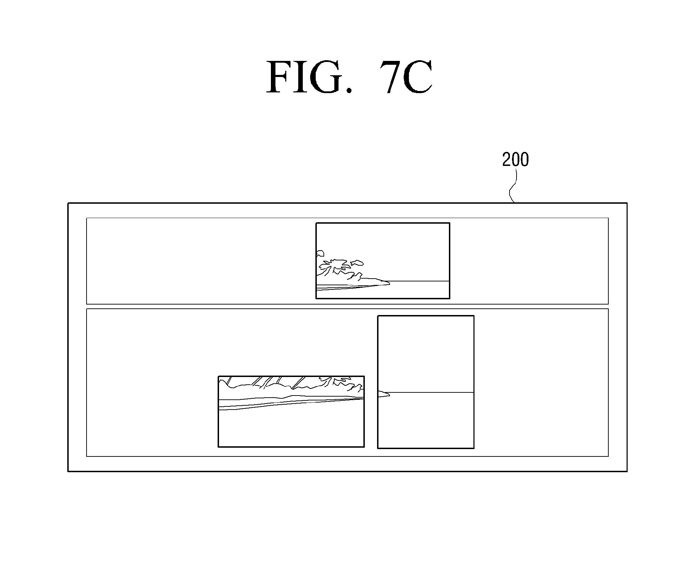

In yet another example, when the video wall system is configured in the non-standard mode as illustrated in FIG. 7C, one display apparatus on the top may be categorized into one group, and the two display apparatuses at the bottom may be categorized into another group. In this example, the area of the groups may correspond to the whole screen of one data source. Accordingly, only a specific area that corresponds to the display apparatus may be displayed on the display apparatus. Additionally, the user may un-group the plurality of display apparatuses through the video wall setup window.

Although a plurality of groups display the same data source in the exemplary embodiments explained above, as need arises, the groups may display different data sources.

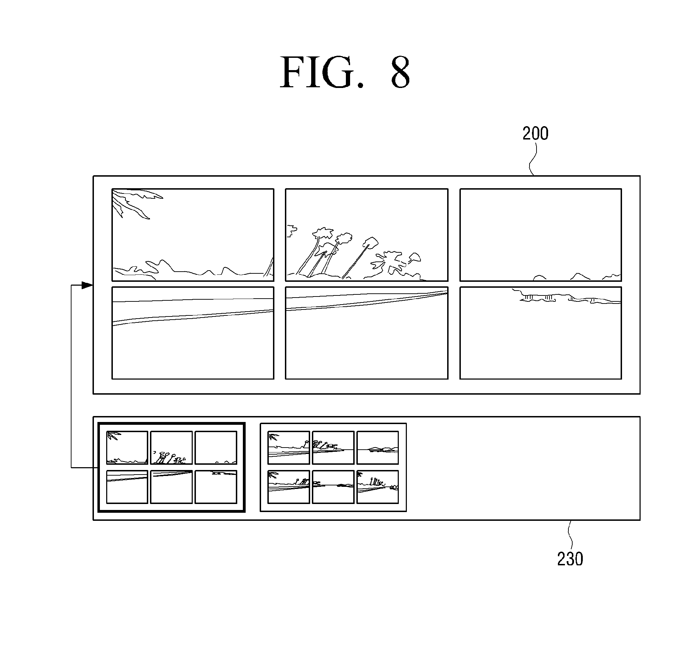

FIG. 8 is a provided to explain a page setup arrangement according to an exemplary embodiment.

Referring to FIG. 8, the video wall setup UI according to an exemplary embodiment may provide a page setup window 230 through which a page to setup a video wall system is set.

That is, the user may configure a plurality of pages with different settings to provide scenarios for the video wall system.

Accordingly, once the plurality of pages are set, different pages with different arrangements may be displayed at preset time intervals. In this situation, the user may set the order of displaying the respective pages, or choose to have the pages displayed in a random order.

Furthermore, the respective pages may provide different configurations based on one data source, or provide configurations based on a plurality of data sources which are different from each other.

Furthermore, the respective pages may also be grouped and displayed as groups, according to a preset or random order.

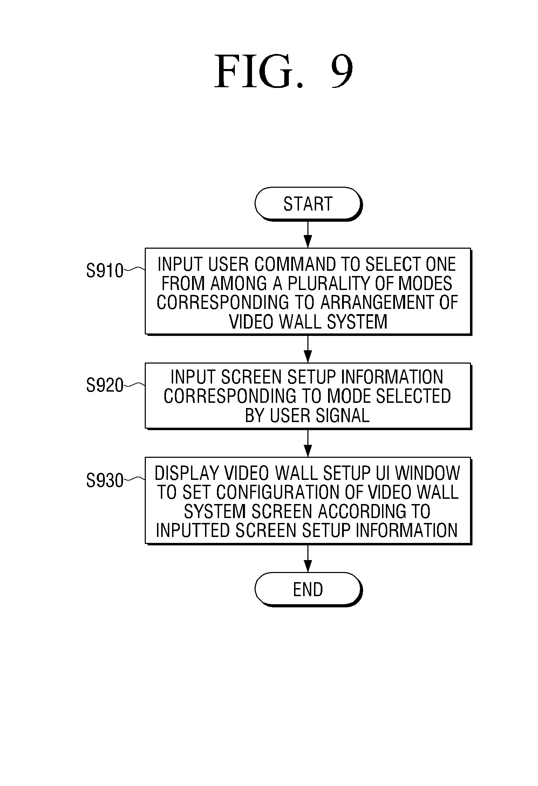

FIG. 9 is a flowchart provided to explain a UI providing method according to an exemplary embodiment.

According to the UI providing method of the display apparatus as illustrated in FIG. 9, at S910, if a user signal is inputted to select one mode from among a plurality of modes corresponding to the arrangement of the video wall system, at S920, the screen setup information corresponding to the mode selected by the user signal is inputted.

At S930, according to the screen setup information as inputted, a video wall setup UI window is displayed through which a user sets up the screen arrangement of the video wall system.

The plurality of modes may include a standard mode to configure the screen of the standard video wall system, and a non-standard mode to configure the screen of the non-standard video wall system.

If the standard mode is selected at S910, the screen setup information required for generating a video wall setup UI window may include at least one of: a display apparatus product line employed for the video wall system; a rectangular arrangement of the video wall system; and whether or not bezel is taken into consideration.

Additionally, if the non-standard mode is selected at S910, the screen setup information corresponding to the non-standard mode may be information about whether or not bezel is taken into consideration.

Additionally, it is possible that various information including, but not limited to, product types, serial numbers, or panel size, regarding the plurality of display apparatuses applied to the video wall system may be displayed, and if the non-standard mode is selected, an apparatus select window may be displayed through which at least one display apparatuses is selected from among the plurality of display apparatuses.

Herein, if at least one display apparatus is selected, the selected display apparatuses may be added to the video wall setup UI window of the non-standard mode.

Furthermore, a source select window may also be displayed, through which a data source to constitute the video wall system is selected.

If at least one data source is selected, the selected data source may be added to the video wall setup UI window automatically.

The plurality of display apparatuses and the data source may be represented by a plurality of corresponding icons, and at least one icon may be selected and moved by a drag and drop method.

Additionally, a grouping mode may be provided, in which a plurality of display apparatuses of a video wall in at least one of standard mode and non-standard mode are categorized into at least one group. In this case, an image from one data source may be divided and applied to the plurality of display apparatuses in the same group.

Additionally, a page setup window to setup a plurality of different video wall pages may also be provided. The plurality of pages setup through the page setup window may be displayed at predetermined time intervals.

Meanwhile, the UI providing method according to an exemplary embodiment may be recorded on a computer-readable recording medium.

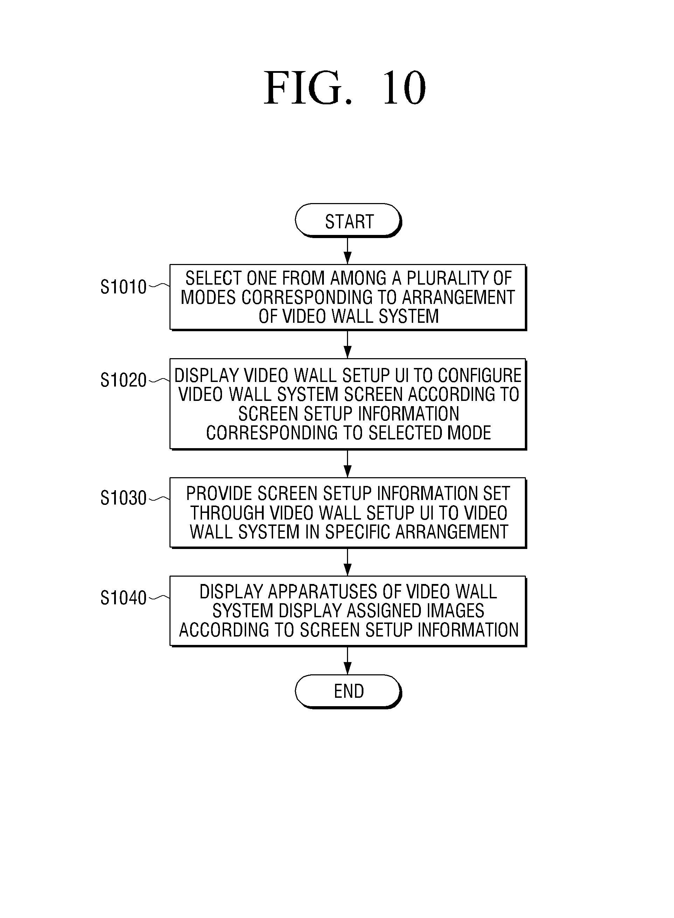

FIG. 10 is a flowchart provided to explain a method for configuring a video wall system according to an exemplary embodiment.

According to the method of configuring a video wall system as illustrated in FIG. 10, at S1010, if one mode from among a plurality of modes corresponding to the arrangement of the video wall system is selected, at S1020, according to the screen setup information corresponding to the selected mode, a video wall setup UI may be displayed, through which a screen configuration of the video wall system is set.

At S1030, the screen setup information set through the video wall setup UI may be provided to the video wall system which is arranged according to predetermined formation.

At S1040, each of the display apparatuses of the video wall system may display the assigned images respectively, according to the screen setup information.

The exemplary embodiment may be applied to a computer-readable recording medium which includes program to execute the UI providing method of the display apparatus explained above. The computer-readable recording medium encompasses all types of recording devices that can store data readable by a computer system. The example of the computer-readable recording medium may include, but not limited to, ROM, RAM, CD-ROM, magnetic tape, floppy disk, or optic data storage device, and the computer-readable recording medium may be distributed to the computer systems connected in networks, and store the codes that are readable or executed by the computer in decentralized manner.

Accordingly, a user may set up the desired video wall easily, through the use of a video wall setup UI as provided.

The foregoing exemplary embodiments and advantages are merely exemplary and are not to be construed as limiting the inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A user interface (UI) providing method of a display apparatus, the UI providing method comprising:
inputting a user signal to select at least one mode from among a plurality of modes corresponding to an arrangement of a video wall system;
inputting screen setup information corresponding to the selected at least one mode from among the plurality of modes; and
displaying a video wall setup UI window to configure a plurality of settings of the video wall system according to the inputted screen setup information.

2. The UI providing method of claim 1, wherein the plurality of modes comprises a standard mode to configure a standard video wall system, and a non-standard mode to configure a non-standard video wall system.

3. The UI providing method of claim 2, wherein, if the standard mode is selected, the screen setup information comprises at least one of: a display apparatus product line used in the video wall system; a horizontal-to-vertical ratio of the video wall system; and whether or not bezel is to be considered to configure the plurality of settings of the video wall system.

4. The UI providing method of claim 2, wherein, if the non-standard mode is selected, the screen setup information comprises whether or not bezel is to be considered to configure the plurality of settings of the video wall system.

5. The UI providing method of claim 2, further comprising storing information about a plurality of display apparatuses to be used in the video wall system, wherein, if the non-standard mode is selected, the method further comprises,
displaying an apparatus select window to select at least one display apparatus from among the plurality of display apparatuses; and
if at least one display apparatus is selected, automatically applying the selected at least one display apparatus to the video wall setup UI window of the non-standard mode.

6. The UI providing method of any one of the preceding claims, further comprising:
displaying a source select window to select at least one data source from which data is supplied to the video wall system; and
if at least one data source is selected, automatically adding the selected at least one data source to the video wall setup UI window.

7. The UI providing method of claim 5, wherein the plurality of the display apparatuses and the at least one data source are represented by a plurality of corresponding icons, and at least one of the plurality of corresponding icons is selectable and movable by dragging and dropping the at least one corresponding icon.

8. The UI providing method of claim 2, further comprising:
inputting a user command to categorize a plurality of display apparatuses to be used in the video wall system in at least one of the standard mode and the non-standard mode into at least one group; and
applying a same data source to the plurality of display apparatuses in the at least one group.

9. The UI providing method of any one of claim 1 to 8, further comprising:
displaying a page setup window to configure a plurality of video wall pages;
and
displaying the plurality of the video wall pages configured through the page setup window at predetermined time intervals.

10. The UI providing method of any one of claim 1 to 8, wherein a plurality of display apparatuses are used in the video wall system, and the plurality of the display apparatuses is configured to form at least one of: a circular shape, a polygonal shape, and a geometrical shape.

11. A video wall system setup method, comprising:
selecting at least one mode from among a plurality of modes corresponding to an arrangement of a video wall system;
displaying a video wall setup user interface (UI) to configure a plurality of settings of the video wall system according to screen setup information corresponding to the selected at least one mode among the plurality of modes;
providing the screen setup information to the video wall system; and
displaying, at the plurality of display apparatuses of the video wall system, a plurality of assigned images according to the screen setup information.

12. A display apparatus for providing a user interface (UI) to setup a video wall system, the display apparatus comprising:
an input unit which receives: a user signal to select at least one mode from among a plurality of modes corresponding to an arrangement of the video wall system, and screen setup information corresponding to the selected at least one mode from among the plurality of modes;
a UI generating unit which generates a video wall setup UI window;
a display unit which displays the video wall setup UI window generated at the UI generating unit; and
a control unit which causes the video wall setup UI window to be generated, so that a screen configuration of the video wall system is set according to the screen setup information inputted through the input unit.

13. The display apparatus of claim 12, wherein the plurality of modes comprises a standard mode to configure a standard video wall system, and a non-standard mode to configure a non-standard video wall system.

14. The display apparatus of claim 13, wherein, if the standard mode is selected, the screen setup information comprises at least one of:
a display apparatus product line used in the video wall system;
a horizontal-to-vertical ratio of the video wall system; and
whether or not bezel is to be considered to configure the plurality of settings of the video wall system.

15. The display apparatus of claim 13, wherein, if the non-standard mode is selected, the screen setup information comprises whether or not bezel is to be considered to configure the plurality of settings of the video wall system.
